# EUROPEAN PATENT SPECIFICATION

(11) **EP 3 059 148 B1**
(45) Date of publication and mention of the grant of the patent: **21.03.2018**
(21) Application number: 16152136.4
(22) Date of filing: 20.01.2016
(51) Int. Cl.: B62J 17/04, B62J 99/00

(54) **STRADDLED VEHICLE**
GRÄTSCHSITZ-FAHRZEUG
VÉHICULE DU TYPE MONTÉ À CALIFOURCHON

(30) Priority: 23.02.2015 JP 2015032806; 18.12.2015 JP 2015247314
(43) Date of publication of application: 24.08.2016
(73) Proprietor: Yamaha Hatsudoki Kabushiki Kaisha, Shizuoka-ken Shizuoka 438-8501 (JP)
(72) Inventor: Nakasai, Makoto, Shizuoka-ken, Shizuoka 4388501 (JP); Suzuki, Yasuhito, Shizuoka-ken, Shizuoka 4388501 (JP)
(74) Representative: Moreland, David

(56) References cited:
- CN-A- 102 372 056
- JP-A- 2002 284 066
- JP-A- 2014 065 464

## Description

### FIELD OF INVENTION

The present invention relates to a straddled vehicle.

### BACKGROUND TO INVENTION

In a straddle-type vehicle, a license plate is arranged in front of the windshield. For example, in Japanese Patent Publication No. 2009-107562 (YAMAHA MOTOR CO.LTD) the license plate is arranged in front of the windshield of the straddle-type vehicle. The license plate is supported by a stay and the stay is fixed to the front surface of the front cover on both sides of the windshield.

However, the shape of the front cover including the windshield has been subject to various techniques for reducing air resistance with respect to the traveling wind in straddle-type vehicles. For example, the traveling wind is able to flow easily to the left or right of the front cover by shaping the middle part of the front cover in the vehicle width direction so as to be positioned further to the front than the left side portion and the right side portion of the front cover. Further, by shaping the lower portion of the front cover so as to be positioned further to the front than the upper portion of the front cover, the traveling wind is able to flow upward easily.

Generally, license plates have a shape that is large enough to ensure conspicuousness or visibility. Therefore, when a license plate shaped as described above is disposed in front of the front cover, air resistance is increased due to the license plate regardless of the design of the shape of the front cover. There is also a concern that the license plate may vibrate or that wind noise may be generated due to the traveling wind hitting the license plate.

Conversely, it has been considered to arranged the license plate not in front of the front cover for the purpose of reducing air resistance by making use of the shape of the front cover, including the windshield. For example in the straddle-type vehicle of Japanese Patent Publication No. 2012-051444 (HONDA MOTOR CO. LTD.), the license plate is attached to the bottom surface of the front cover and the license plate is arranged in a position lower than the front cover. Since the license plate is not arranged in front of the front cover, air resistance is reduced in comparison to when the license plate is arranged in front of the front cover. However, the inventor of JP 2012-051444 considered further reducing the air resistance as the traveling wind still hits the license plate.

First, the inventor considered arranging the license plate in a position further rearward while disposing the license plate in a position lower than the front cover as described in JP 2012-051444. That is, by arranging the license plate further rearward, the inventor thought that the traveling wind would be less likely to hit the license plate. However, there is a limit to the amount the license plate can be moved rearward since the steering device is positioned rearward of the license plate.

Moreover, the front cover and the license plate turn with the steering device in JP 2012-051444. As a result, the steering device is not hindered or obstructed by the license plate when the steering device is turned. However, in the case of a straddle-type vehicle of a type in which the front cover, including the windshield, does not turn with the steering device, there is a concern that the license plate would hinder or obstruct the steering device if the license plate is moved rearward.

That is, the amount or distance that the license plate can be moved rearward is further limited in a straddle-type vehicle of a type in which the front cover, including the windshield, does not turn with the steering device. As a result, the inventor of JP 2012-051444 realized that it would be particularly difficult to reduce air resistance by moving the license plate further rearward in a straddle-type vehicle of the type in which the front cover, including the windshield, does not turn with the steering device.

In order to avoid hindrance or obstruction between the license plate and the steering device in the straddle-type vehicle of the type in which the front cover, including the windshield, does not turn with the steering device, it is necessary to ensure a greater distance between the license plate and the steering device. As a result, the inventor of JP 2012-051444 considered increasing the size of the front cover in order to reduce the air resistance caused by the license plate while ensuring a distance or space between the license plate and the steering device. That is, the traveling wind is less likely to hit the license plate due to an increase in the size of the front cover. However, there is a concern that an increase in the size of the front cover would become a problem and the license plate would be difficult to see due to the front cover.

An object of at least one embodiment of at least one aspect of the present invention is to avoid hindrance or obstruction between the license plate and the steering device, to prevent or suppress an increase in the size of the front cover, and to reduce air resistance while ensuring good conspicuousness or visibility of the license plate of a straddled vehicle of the type in which the front cover, including the windshield, does not turn with the steering device.

It is an object of at least one embodiment of at least one aspect of the present invention to obviate or at least mitigate one or more problems or disadvantages in the prior art.

JP 2002 284066 A (HONDA) discloses a front cowling structure for a motorcycle, wherein a gate type front fork is arranged below a head pipe, and the upper part of the front fork and the head pipe are covered with a front cowling. The inside of the front cowling is divided into an upper part and a lower part by means of a partition plate put over a fork bridge of the front fork, while the partition plate is divided into a left part and a right part, and hydraulic brake hoses are passed through an opening arranged in a divided part.

JP 2014 065-464 A (HONDA), on which the preamble of independent claim 1 is based, discloses a front part of a motor cycle comprising:
a front cowl which covers a periphery of a headlight unit; and a number stay which extends to the vehicle front side and supports a number plate. The headlight unit has headlight bulbs at left and right parts when viewed in a vehicle width direction. The front cowl has a bottom part which covers lower surfaces of the left and right headlight bulbs. A recessed part which recesses upward so as to avoid the number stay is formed at the bottom part.

CN 102 372 056 A (YAMAHA) discloses an automatic two-wheeled vehicle, which comprises a head tube, a steering shaft inserted into the head tube, a front fork connected with the lower part of the steering shaft, a front wheel supported on the lower part of the front fork, a head lamp arranged in front of the head tube, a front sealing cover which is arranged above the front wheel, a lower sealing cover which is arranged on the lower part of the front sealing cover and positioned above the front wheel, and a supporting part which is arranged at a position lower than the head lamp and used for supporting a license plate, wherein the head lamp is arranged on the front sealing cover; the front rim of the lower part of the front sealing cover is positioned at a position in front of the head lamp; and the supporting part is arranged on the lower sealing cover, passes through the lower side of the lower sealing cover and extends to a position in front of the front end of the front sealing cover.

### SUMMARY OF INVENTION

Various aspects of the present invention are defined in the independent claims. Some preferred features are defined in the dependent claims.

According to an aspect of the present invention there is provided a straddled vehicle as described in independent claim 1. At least a portion of the license plate is disposed in the space between the meter cover and the windshield by the plate fixing portion. Therefore, the license plate being directly hit by the traveling wind may be suppressed or prevented. As a result wind resistance may be reduced and the vibration of the license plate or the generation of wind noise may be reduced or suppressed.

Further, the windshield may become bent or deformed when being hit by the traveling wind. As a result, in order to prevent friction with the meter cover and scratching which may be due to the bending or deformation of the windshield, the space is provided between the windshield and the meter cover. An increase in the size of the front cover may be reduced, prevented or suppressed by using this space as a space for disposing the license plate.

Furthermore, since the license plate is disposed in the abovementioned space, the problem of hindrance or obstruction between the license plate and the steering device may be reduced or prevented.

The license plate may also be easily seen from the front through the translucent windshield. As a result, good conspicuousness or visibility of the license plate may be ensured. Moreover, the license plate overlaps the meter cover when viewed from the front of the vehicle. As a result even if the license plate is disposed between the windshield and the meter cover, the license plate may be prevented or limited from entering the field of view of the rider. This may allow a reduction in the comfort of the rider to be prevented or suppressed.

The plate fixing portion may be provided in the space between the meter cover and the windshield. In this case, at least a portion of the license plate may be easily disposed in the space between the meter cover and the windshield.

An upper edge of the license plate may be positioned lower than an upper edge of the meter cover when viewed from the front of the vehicle. In this case, blocking of the field of view of the rider by the license plate may be suppressed or prevented.

At least a portion of the license plate may extend rearward and upward. The front cover may include a hole disposed under the windshield. The hole may communicate with the space between the meter cover and the windshield. Although the traveling wind hits the windshield in this case, a portion of the traveling wind may pass or flow through the hole and may escape or flow into the space between the meter cover and the windshield. Consequently, a load caused by the traveling wind hitting the windshield may be reduced. Moreover, at least a portion of the license plate may be disposed or arranged along or in the flow of the portion of traveling wind that may escape or flow into the space between the meter cover and the windshield. This may be due to at least a portion of the license plate extending rearward and upward. As a result, resistance of the traveling wind caused by the license plate may be limited or reduced.

The front cover may include an upper shield fixing portion and a lower shield fixing portion. The windshield may be fixed to the upper shield fixing portion. The lower shield fixing portion may be disposed lower than the upper shield fixing portion. The windshield may be fixed to the lower shield fixing portion. The plate fixing portion may be disposed between the upper shield fixing portion and the lower shield fixing portion. The license plate may be disposed between the upper shield fixing portion and the lower shield fixing portion. In this case, the license plate may be disposed in a compact manner between the upper shield fixing portion and the lower shield fixing portion.

The plate fixing portion may be provided on the meter cover. In this case, the windshield may be easily replaced without removing the license plate.

The straddled vehicle may further comprise a stay for fixing the windshield. The stay may be provided on the meter cover. The plate fixing portion may be provided on the stay. In this case, the stay for fixing the windshield and the plate fixing portion may be integral or used as a common part.

The stay may include a left stay and a right stay. The left stay and the right stay may be disposed away from each other in the vehicle width direction. The left stay may include a left upper shield fixing portion for fixing the windshield. The left stay may include a left lower shield fixing portion for fixing the windshield. The left lower shield fixing portion may be disposed lower than the left upper shield fixing portion. The right stay may include a right upper shield fixing portion for fixing the windshield. The right stay may include a right lower shield fixing portion for fixing the windshield. The right lower shield fixing portion may be disposed lower than the right upper shield fixing portion. The plate fixing portion may include a left plate fixing portion and a right plate fixing portion. The left plate fixing portion may be disposed between the left upper shield fixing portion and the left lower shield fixing portion.

The right plate fixing portion may be disposed between the right upper shield fixing portion and the right lower shield fixing portion. In this case, the license plate may be disposed or arranged in a compact manner.

The license plate may be disposed between the left upper shield fixing portion and the left lower shield fixing portion. The license plate may be disposed between the right upper shield fixing portion and the right lower shield fixing portion. In this case, the license plate may be disposed arranged or in a compact manner.

The license plate may be disposed across the left stay and the right stay. In this case, the license plate may be disposed or arranged in a compact manner.

The plate fixing portion may be provided on the windshield. In this case, the license plate may be removed or removable by removing the windshield. As a result, maintenance on the meter cover and the like may be facilitated.

A dimension of the license plate in the vehicle width direction may be larger than a dimension of the license plate in the up-down direction. In this case, the effect of the reduction in wind resistance may be improved since the license plate having a larger dimension in the vehicle width direction may be disposed or arranged behind the windshield.

The straddled vehicle may further comprise an upper extending member and a lower extending member. The upper extending member may be disposed above the front wheel. The upper extending member may extend in the vehicle width direction from a left side of the steering shaft to a right side of the steering shaft. The lower extending member may be disposed between the front wheel and the upper extending member in the vehicle up-down direction. The lower extending member may extend in the vehicle width direction from the left side of the steering shaft to the right side of the steering shaft. The front cover may extend in the vehicle width direction from a left side of a left side edge of the upper extending member and a left side edge of the lower extending member to a right side of a right side edge of the upper extending member and a right side edge of the lower extending member. The front cover may extend in the vehicle up-down direction from a position higher than the handle member to a position lower than at least a portion of the lower extending member. The effect of reducing the size of the front cover in this way may be especially effective in a straddled vehicle provided with a large front cover.

The straddled vehicle may further comprise a head lamp. The head lamp may be provided on the front cover. At least a portion of the head lamp may be disposed lower than the meter unit. The plate fixing portion may be disposed higher than the head lamp. In this case, the freedom of design for disposing or arranging the head lamp may be improved in comparison to when the head lamp is disposed or arranged in front of the front cover. The size of the head lamp may be increased.

The windshield and the meter cover may be inclined rearward and upward with respect to a horizontal direction. An angle of the extension direction of the meter cover with respect to the horizontal direction is smaller than an angle of the extension direction of the windshield with respect to the horizontal direction. In this case, a gap or space between the meter cover and the windshield may increase in the upward direction. As a result, the space for disposing or arranging the license plate may be more easily ensured.

### BRIEF DESCRIPTION OF DRAWINGS

An embodiment of the present invention will now be described, by way of example only, with reference to the accompanying drawings, which are:
Figure 1 a side view of a straddled vehicle according to an embodiment of the present invention;.
Figure 2 a front view of the straddled vehicle of Figure 1;
Figure 3 a rear view of the straddled vehicle of Figure 1;
Figure 4 a vicinity of a handle member of the straddled vehicle of Figure 1 as seen obliquely from the rear;
Figure 5 a cross-sectional view along line V to V of Figure 2;
Figure 6 a cross-sectional view along line VI to VI of Figure 2;
Figure 7 a perspective view showing stays for fixing the windshield of the straddled vehicle of Figure 1; and
Figure 8 a plate fixing portion according to a modified example.

### DETAILED DESCRIPTION OF DRAWINGS

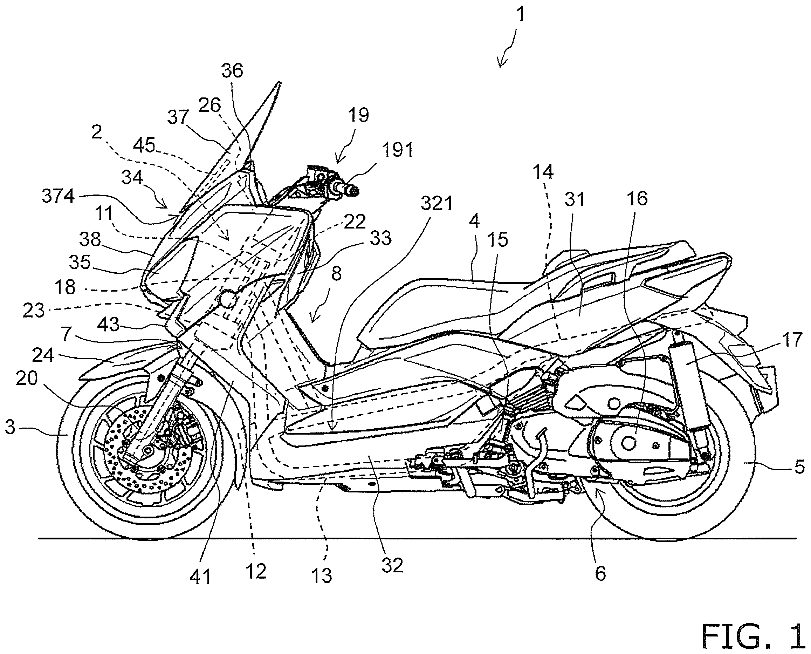

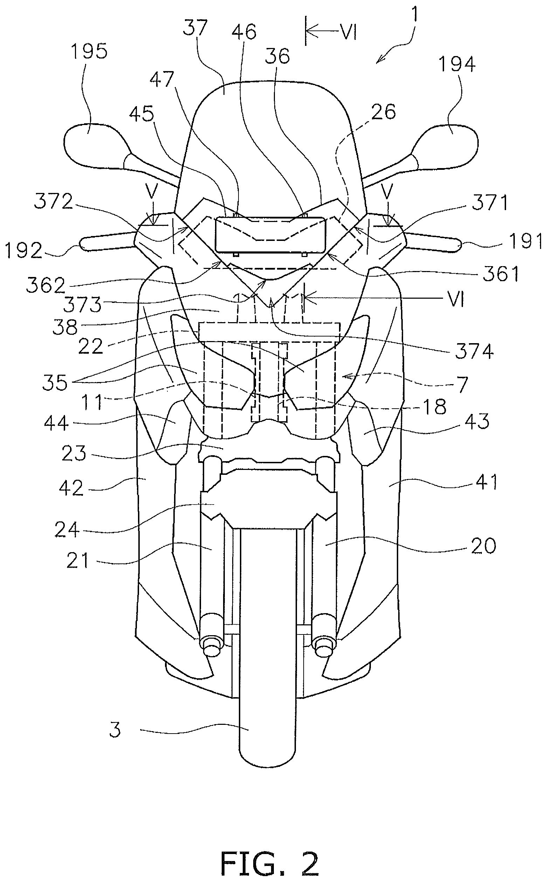

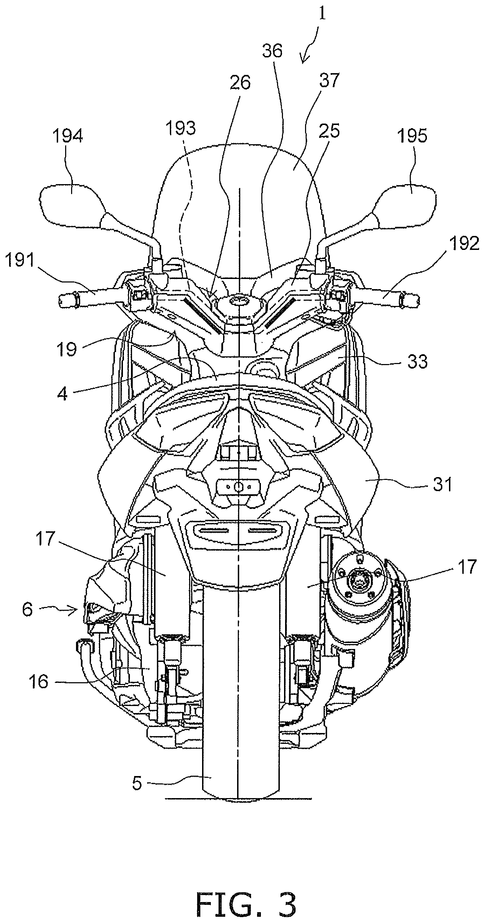

A straddled vehicle 1 according to an embodiment will now be described in detail with reference to the drawings. Figure 1 is a side view of the straddled vehicle 1. Figure 2 is a front view of the straddled vehicle 1. Figure 3 is a rear view of the straddled vehicle 1. In the following description, a scooter-type vehicle or scooter will be described as one example of a straddled vehicle.

The front-back direction of the scooter-type vehicle 1, the up-down direction of the scooter-type vehicle 1, and the left-right direction of the scooter-type vehicle 1 are the respective front and back, up and down, and left and right directions as seen from a rider of the scooter-type vehicle 1. Moreover, the front-back direction does not only indicate a direction parallel to the front-back direction of the scooter-type vehicle 1, but also includes any direction slanted or inclined within a range of ±45° with respect to the front-back direction of the scooter-type vehicle 1. In other words, a direction closer to the front-back direction than the left-right direction and the up-down direction is included in the front-back direction.

Similarly, the up-down direction includes any direction slanted or inclined within a range of ±45° with respect to the up-down direction of the scooter-type vehicle 1. In other words, a direction closer to the up-down direction than the front-back direction and the left-right direction is included in the up-down direction.

Similarly, the left-right direction includes any direction slanted or inclined within a range of ±45° with respect to the left-right direction of the scooter-type vehicle 1. In other words, a direction closer to the left-right direction than the front-back direction or the up-down direction is included in the left-right direction.

As shown in Figure 1, the scooter-type vehicle 1 includes a vehicle body frame 2, a front wheel 3, a seat 4, a rear wheel 5, a power unit 6, a steering device 7, and a vehicle body cover 8.

The vehicle body frame 2 includes a head pipe 11, a down frame 12, a lower frame 13, and a rear frame 14. The down frame 12 extends downward from the head pipe 11. The lower frame 13 is connected to a lower portion of the down frame 12. The lower frame 13 extends rearward from the lower portion of the down frame 12. The rear frame 14 is connected to the lower frame 13. The rear frame 14 extends rearward and upward from a rear portion of the down frame 12.

The power unit 6 is disposed under the seat 4. The power unit 6 is supported in a swingable manner on the vehicle body frame 2. The power unit 6 includes an engine 15 and a transmission 16. The power unit 6 supports the rear wheel 5 in a rotatable manner. The rear wheel 5 is supported by the vehicle body frame 2 via a rear suspension 17.

The steering device 7 includes a steering shaft 18, a handle member 19, a left suspension 20, a right suspension 21, an upper extending member 22, and a lower extending member 23. The steering shaft 18 is inserted into the head pipe 11. The steering shaft 18 is supported by the head pipe 11 in a manner that allows revolving or turning of the steering shaft 18 to the left and right. A lower portion of the steering shaft 18 is connected to the left suspension 20 and the right suspension 21 via the lower extending member 23.

The left and right suspensions 20, 21 support the front wheel 3 in a rotatable manner. The front wheel 3 is arranged lower than the steering shaft 18. A front fender 24 is arranged over the front wheel 3. The steering shaft 18 and the left and right suspensions 20, 21 are coupled by the upper extending member 22 and the lower extending member 23.

The upper extending member 22 is a so-called upper bracket. The upper extending member 22 is arranged above the front wheel 3. The upper extending member 22 extends in the vehicle width direction from the left side of the steering shaft 18 to the right side of the steering shaft 18. The upper extending member 22 is larger in the vehicle width direction than the distance between the left suspension 20 and the right suspension 21.

The lower extending member 23 is a so-called lower bracket. The lower extending member 23 is arranged between the upper extending member 22 and the front wheel 3 in the vehicle up-down direction. The lower extending member 23 extends in the vehicle width direction from the left side of the steering shaft 18 to the right side of the steering shaft 18. The lower extending member 23 is larger in the vehicle width direction than the distance between the left suspension 20 and the right suspension 21.

An upper portion of the steering shaft 18 is coupled to the handle member 19 via the upper extending member 22. The handle member 19 is operated by the rider to turn the front wheel 3. The handle member 19 includes a left grip 191, a right grip 192, and a handle bar 193 (see Figure 3). The left and right grips 191 and 192 are attached to the handle bar 193. The handle bar 193 is coupled to the steering shaft 18 via the upper extending member 22.

A left mirror 194 and a right mirror 195 are attached to the handle bar 193.

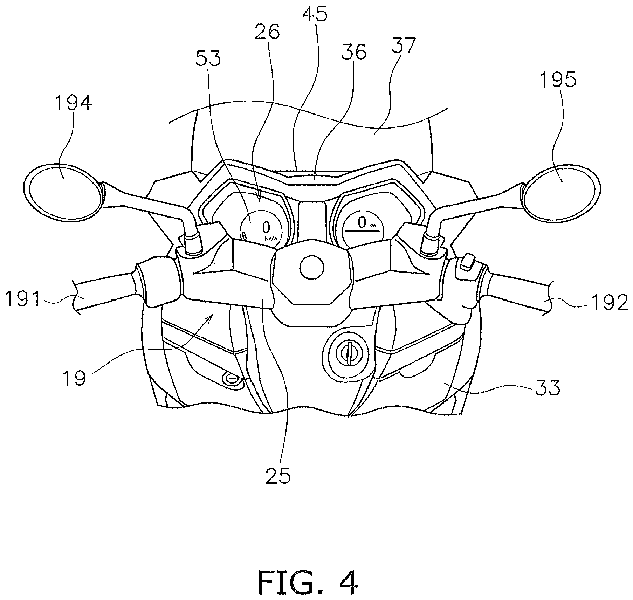

The handle bar 193 is covered by a handle cover 25. Figure 4 shows the vicinity of a handle member 19 when viewed obliquely from the rear. As shown in Figure 4, a meter unit 26 is arranged forward of the handle member 19. The meter unit 26 includes a display unit 53 for displaying the vehicle speed and the like. The display unit 53 may also include a tachometer for displaying the engine rotation speed. The display unit 53 may also display a remaining fuel amount, the time, a travel distance, a warning light, or the like.

As shown in Figure 1, the vehicle body cover 8 includes a rear cover 31, a lower cover 32, a leg shield 33, a front cover 34, and a meter cover 36. The rear cover 31 covers the vicinity of the rear frame 14. The seat 4 is disposed over the rear cover 31. The seat 4 is disposed rearward of the head pipe 11. A rider sits on the seat 4. The seat 4 is fixed to the vehicle body frame 2. The seat 4 is supported by the rear frame 14 via a stay (not shown).

The lower cover 32 is arranged between the front cover 34 and the rear cover 31. The lower cover 32 covers the vicinity of the lower frame 13. The upper surface of the lower cover 32 includes a foot placing portion 321. The foot placing portion 321 is provided for a rider to place his or her feet. The foot placing portion 321 is arranged lower than and forward of the seat 4.

The leg shield 33 covers the back of the head pipe 11. The leg shield 33 covers the back of the down frame 12. The leg shield 33 is arranged in front of the seat 4. The lower edge portion of the leg shield 33 is connected to the foot placing portion 321. The handle member 19 is arranged above the leg shield 33.

The front cover 34 is arranged in front of the leg shield 33. The front cover 34 is arranged in front of the meter unit 26 and the steering shaft 18. The front cover 34 extends in the vehicle up-down direction from a position higher than the handle member 19 to a position lower than at least a portion of the lower extending member 23.

A head lamp 35 is attached to the front cover 34. At least a portion of the head lamp 35 is arranged lower than the meter unit 26. The entire head lamp 35 may be arranged lower than the meter unit 26. While in the present embodiment two head lamps 35 are provided separately on the right and left, it will be appreciated that in other embodiments only one head lamp may be provided.

The front cover 34 is supported by the vehicle body frame 2 and is not supported by the steering device 7. Therefore, the steering device 7 is provided in a manner that allows turning of the steering device independently from the front cover 34. That is, the front cover 34 does not turn when the steering device 7 is turned.

The meter cover 36 is arranged in front of the meter unit 26. The meter unit 26 and the meter cover 36 overlap each other when viewed from the front of the vehicle. A lower portion of the meter cover 36 is positioned forward of an upper portion of the meter cover 36. That is, the meter cover 36 is slanted or inclined in the up-down direction. The upper edge portion of the meter cover 36 is positioned higher than the meter unit 26. The upper edge portion of the meter cover 36 is positioned higher than the front surface portion 38. The upper edge portion of the meter cover 36 is positioned higher than the handle cover 25.

The meter cover 36 is larger in the vehicle width direction than the upper extending member 22. The meter cover 36 is larger in the vehicle width direction than the lower extending member 23. The meter cover 36 is larger in the vehicle width direction than the front fender 24. The meter cover 36 is larger in the vehicle width direction than the front fender 24.

As shown in Figure 2, the lower edge of the meter cover 36 has a shape that tapers downward when viewed from the front of the vehicle. Specifically, the lower edge portion of the meter cover 36 includes a left lower edge portion 361 and a right lower edge portion 362. The distance in the vehicle width direction between the left lower edge portion 361 and the right lower edge portion 362 decreases in the downward direction as seen from the front of the vehicle. The left lower edge portion 361 is slanted or inclined downward so as to approach the center of the vehicle in the vehicle width direction. The right lower edge portion 362 is slanted or inclined downward so as to approach the center of the vehicle in the vehicle width direction.

The front cover 34 includes a windshield 37 and a front surface portion 38. The windshield 37 is arranged in front of the meter cover 36. The windshield 37 and the meter cover 36 overlap each other when viewed from the front of the vehicle. The windshield 37 is translucent. The windshield 37 is made of resin. The lower portion of the windshield 37 is positioned forward of the upper portion of the windshield 37. That is, the windshield 37 is slanted or inclined in the up-down direction. The windshield 37 is curved so that the middle portion in the vehicle width direction of the windshield 37 is positioned forward of the left side and right side portions of the windshield 37.

The upper edge portion of the windshield 37 is positioned higher than the meter cover 36. The upper edge portion of the windshield 37 is positioned higher than the left and right mirrors 194 and 195. The lower edge portion of the windshield 37 is positioned lower than the left and right grips 191 and 192.

The windshield 37 is larger in the vehicle width direction than the upper extending member 22. The windshield 37 is larger in the vehicle width direction than the lower extending member 23. The windshield 37 is larger in the vehicle width direction than the front fender 24. The windshield 37 is larger in the vehicle width direction than the front fender 24.

The lower edge of the windshield 37 has a shape that tapers downward when viewed from the front of the vehicle. Specifically, the lower edge portion of the windshield 37 includes a left lower edge portion 371, a right lower edge portion 372, and a middle edge portion 373. The distance between the left lower edge portion 371 and the right lower edge portion 372 in the vehicle width direction decreases in the downward direction when viewed from the front of the vehicle. The left lower edge portion 371 is slanted or inclined downward so as to approach the center of the vehicle in the vehicle width direction. The right lower edge portion 372 is slanted or inclined downward so as to approach the center of the vehicle in the vehicle width direction. The left lower edge portion 371 and the right lower edge portion 372 of the windshield 37 are connected to the front surface portion 38.

The middle edge portion 373 is positioned between the left lower edge portion 371 and the right lower edge portion 372. The middle edge portion 373 is arranged offset or spaced from the front surface portion 38. As a result, a hole 374 is provided under the middle edge portion 373 of the windshield 37. The hole 374 communicates with the space between the meter cover 36 and the windshield 37.

The front surface portion 38 is arranged under the windshield 37. The front surface portion 38 is opaque. The head lamp 35 is provided on the front surface portion 38. A left indicator 43 and a right indicator 44 are provided on the front surface portion 38. A middle portion in the vehicle width direction of the front surface portion 38 is positioned forward of a left side portion and a right side portion of the front surface portion 38. A lower portion of the front surface portion 38 is positioned forward of an upper portion of the front surface portion 38.

The front surface portion 38 extends in the vehicle width direction from the left side of the left side edges of the upper extending member 22 and the lower extending member 23 to the right side of the right side edges of the upper extending member 22 and the lower extending member 23. That is, the front surface portion 38 is larger in the vehicle width direction than the upper extending member 22. Further, the front surface portion 38 is larger in the vehicle width direction than the lower extending member 23. The front fender 24 is arranged below the front surface portion 38.

The front cover 34 includes a left side surface portion 41 and a right side surface portion 42. The left side surface portion 41 is arranged on the left side of the front wheel 3 when viewed from the front of the vehicle. The right side surface portion 42 is arranged on the right side of the front wheel 3 when viewed from the front of the vehicle. The left side surface portion 41 and the right side surface portion 42 extend downward from the front surface portion 38 when viewed from the front of the vehicle. The left side surface portion 41 and the right side surface portion 42 extend to a position lower than the lower extending member 23. The left side surface portion 41 and the right side surface portion 42 extend to a position lower than the front edge of the front fender 24. The left side surface portion 41 and the right side surface portion 42 extend to a position lower than the rotating shaft of the front wheel 3. The left side surface portion 41 and the right side surface portion 42 are connected to the lower cover 32.

As shown in Figure 2, a license plate 45 is arranged on the front cover 34. At least a portion of the license plate 45 is arranged in a space between the meter cover 36 and the windshield 37, and overlaps the meter cover 36 when viewed from the front of the vehicle. The license plate 45 is arranged behind the windshield 37 and visible from the front of the vehicle through the windshield 37. The entire license plate 45 may be arranged in the space between the meter cover 36 and the windshield 37, and may overlap the meter cover 36 when viewed from the front of the vehicle.

The extension of the license plate 45 in the vehicle width direction is larger than the extension of the license plate 45 in the up-down direction. The license plate 45 extends rearward and upward.

The upper edge of the license plate 45 is positioned lower than the upper edge of the meter cover 36 when viewed from the front of the vehicle. A portion of the license plate 45 is positioned higher than the upper edge of the meter cover 36. The upper edge of the license plate 45 is positioned lower than the upper edge of the windshield 37. The license plate 45 is disposed higher than the hole 374. The license plate 45 is arranged between the left lower edge portion 371 and the right lower edge portion 372 of the windshield 37.

The bottom edge, the right side edge and the left side edge of the license plate 45 overlap the windshield 37 when viewed from the front of the vehicle. The entire license plate 45 is overlapped by the windshield 37 when viewed from the front of the vehicle. The entire license plate 45 can be seen through the windshield 37.

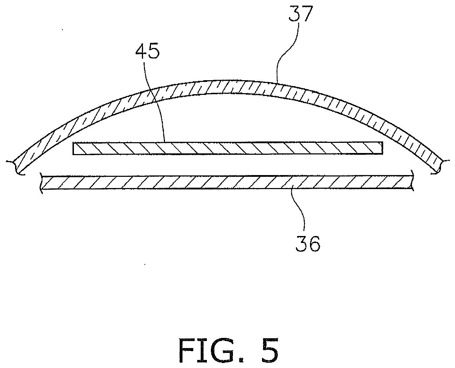

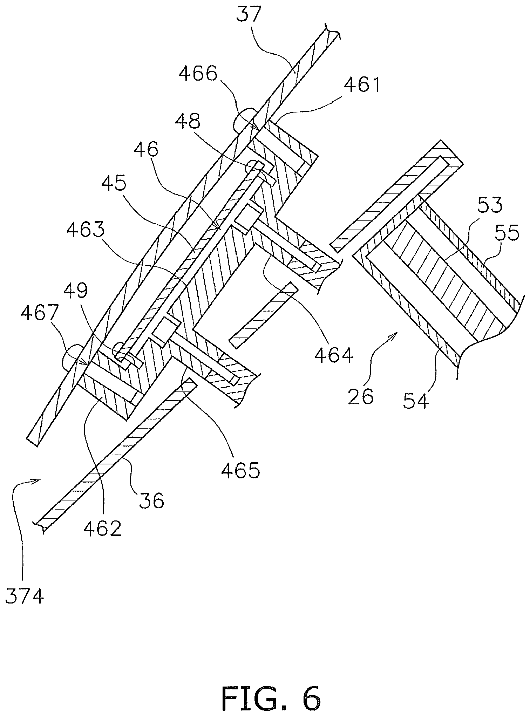

Figure 5 is a cross sectional view along line V to V in Figure 2. Figure 6 is a cross sectional view along line VI to VI in Figure 2. The license plate 45 has a linear shape as can be seen in Figures 5 and 6. However, in other embodiments the license plate 45 may be curved. As shown in Figure 5, the windshield 37 is curved so as to protrude towards the front.

At least a portion of the meter cover 36 overlaps with the license plate 45 when viewed from the front of the vehicle. That is, a portion of the meter cover 36 that is positioned behind the license plate 45 has a linear shape. Since the windshield 37 is positioned in front of the meter cover 36, the traveling wind mostly hits the windshield 37 and is less likely to hit the meter cover 36. Therefore, an increase in travel resistance is prevented even if the meter cover 36 has a linear shape. The meter cover 36 is not limited to a linear shape and may be curved.

As shown in Figure 6, the windshield 37 and the meter cover 36 are slanted or inclined with respect to a horizontal direction or axis. An angle between an axis or direction along or in which the meter cover 36 extends and the horizontal direction or axis is smaller than an angle between an axis or a direction along or in which the windshield 37 extends and the horizontal direction or axis. Therefore, a gap or space between the meter cover 36 and the windshield 37 increases in the upward direction. At least a portion of the license plate 45 is arranged in front of an upper portion of the meter cover 36. As a result, the space for arranging the license plate 45 can be ensured and the license plate 45 can be easily arranged.

As shown in Figure 6, the meter unit 26 includes a box portion 54 in which the display unit 53 is arranged. The box portion 54 includes a cover portion 55 that is translucent so that the display unit 53 is visible.

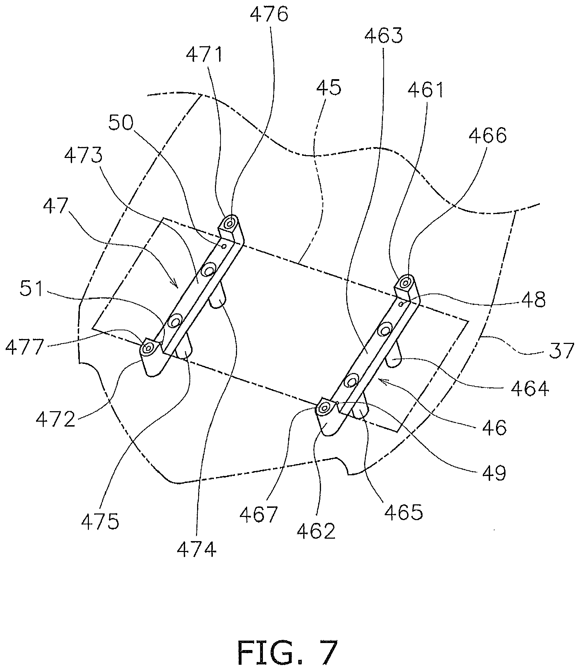

The front cover 34 includes stays 46, 47 for fixing the wind shield 37. Figure 7 is a perspective view showing the stays 46,47. As shown in Figures 6 and 7, the stays 46, 47 are provided on the meter cover 36. The stays 46, 47 are arranged in the space between the meter cover 36 and the windshield 37. The stays 46, 47 are attached to the meter cover 36. Alternatively, the stays 46, 47 may be extend through the meter cover 36 and be attached to the vehicle body frame 2 inside the meter cover 36.

The stays 46, 47 include a left stay 46 and a right stay 47. The left stay 46 and the right stay 47 are spaced from each other in the vehicle width direction. The left stay 46 has a left upper projecting portion 461, a left lower projecting portion 462, and a left recessed portion 463. The left upper projecting portion 461 and the left lower projecting portion 462 project from the left recessed portion 463. The left recessed portion 463 is positioned between the left upper projecting portion 461 and the left lower projecting portion 462.

The left stay 46 includes a left upper fixing portion 464 and a left lower fixing portion 465 for fixing the left stay 46 to the meter cover 36. Screw holes are provided in each of the left upper fixing portion 464 and the left lower fixing portion 465. The screw holes in the left upper fixing portion 464 and the left lower fixing portion 465 open on to the left recessed portion 463.

The left stay 46 includes a left upper shield fixing portion 466 and a left lower shield fixing portion 467 for fixing the windshield 37. The left lower shield fixing portion 467 is arranged lower than the left upper shield fixing portion 466. The left upper shield fixing portion 466 and the left lower shield fixing portion 467 each include screw holes. The left upper shield fixing portion 466 is provided on the left upper projecting portion 461. The left lower shield fixing portion 467 is provided on the left lower projecting portion 462.

The right stay 47 has a right upper projecting portion 471, a right lower projecting portion 472, and a right recessed portion 473. The right upper projecting portion 471 and the right lower projecting portion 472 project from the right recessed portion 473. The right recessed portion 473 is positioned between the right upper projecting portion 471 and the right lower projecting portion 472.

The right stay 47 includes a right upper fixing portion 474 and a right lower fixing portion 475 for fixing the right stay 47 to the meter cover 36. Screw holes are provided in each of the right upper fixing portion 474 and the right lower fixing portion 475. The screw holes in the right upper fixing portion 474 and the right lower fixing portion 475 are open on the right recessed portion 473.

The right stay 47 includes a right upper shield fixing portion 476 and a right lower shield fixing portion 477 for fixing the windshield 37. The right lower shield fixing portion 477 is arranged lower than the right upper shield fixing portion 476. The right upper shield fixing portion 476 and the right lower shield fixing portion 477 each include screw holes. The right upper shield fixing portion 476 is provided on the right upper projecting portion 471. The right lower shield fixing portion 477 is provided on the right lower projecting portion 472.

The windshield 37 is fixed by screws to the left upper shield fixing portion 466 and the left lower shield fixing portion 467. As a result, the windshield 37 is fixed to the left stay 46. The windshield 37 is fixed by screws to the right upper shield fixing portion 476 and the right lower shield fixing portion 477. As a result, the windshield 37 is fixed to the right stay 47.

Plate fixing portions 48 to 51 are provided on the stays 46 and 47 for fixing the license plate 45. The license plate 45 is arranged across the left stay 46 and the right stay 47. The plate fixing portions 48 to 51 are provided in the space between the meter cover 36 and the windshield 37. The plate fixing portions 48 to 51 are arranged higher than the head lamp 35. At least a portion of the plate fixing portions 48 to 51 is arranged lower than the upper edge portion of the meter cover 36. All of the plate fixing portions 48 to 51 may be arranged lower than the upper edge portion of the meter cover 36.

The plate fixing portions 48 to 51 include a left upper plate fixing portion 48 and a left lower fixing portion 49. The left lower fixing portion 49 is arranged lower than the left upper plate fixing portion 48. The left upper plate fixing portion 48 and the left lower fixing portion 49 are arranged between left upper shield fixing portion 466 and the left lower shield fixing portion 467. The left upper plate fixing portion 48 and the left lower fixing portion 49 each include screw holes. The left upper plate fixing portion 48 and the left lower fixing portion 49 are provided on the left recessed portion 463. The left upper plate fixing portion 48 is positioned between the left upper shield fixing portion 466 and the left upper fixing portion 464. The left lower fixing portion 49 is positioned between the left lower shield fixing portion 467 and the left lower fixing portion 465.

The plate fixing portions 48 to 51 include a right upper plate fixing portion 50 and a right lower plate fixing portion 51. The right lower plate fixing portion 51 is arranged lower than the right upper plate fixing portion 50. The right upper plate fixing portion 50 and the right lower plate fixing portion 51 are arranged between the right upper shield fixing portion 476 and the right lower shield fixing portion 477. The right upper plate fixing portion 50 and the right lower plate fixing portion 51 each include screw holes. The right upper plate fixing portion 50 and the right lower plate fixing portion 51 are provided on the right recessed portion 473. The right upper plate fixing portion 50 is positioned between the right upper shield fixing portion 476 and the right upper fixing portion 474. The right lower plate fixing portion 51 is positioned between the right lower shield fixing portion 477 and the right lower fixing portion 475.

The left upper fixing portion 464 and the left lower fixing portion 465 are fixed to the meter cover 36 with screws. As a result, the left stay 46 is fixed to the meter cover 36. The right upper fixing portion 474 and the right lower fixing portion 475 are fixed to the meter cover 36 with screws. As a result, the right stay 47 is fixed to the meter cover 36.

The license plate 45 is fixed to the left upper plate fixing portion 48 and the left lower plate fixing portion 49 with screws. As a result, the license plate 45 is fixed to the left stay 46. That is, the license plate 45 is fixed to the meter cover 36 via the left stay 46. The license plate 45 is arranged on the left recessed portion 463 between the left upper shield fixing portion 466 and the left lower shield fixing portion 467.

The license plate 45 is fixed to the right upper plate fixing portion 50 and the right lower plate fixing portion 51 with screws. As a result, the license plate 45 is fixed to the right stay 47. That is, the license plate 45 is fixed to the meter cover 36 via the right stay 47. The license plate 45 is arranged on the right recessed portion 473 between the right upper shield fixing portion 476 and the right lower shield fixing portion 477.

As described above, the license plate 45 is fixed to the meter cover 36 via the stays 46 and 47. As a result, the license plate 45 is arranged between the meter cover 36 and the windshield 37.

As described above, at least a portion of the license plate 45 is arranged in the space between the meter cover 36 and the windshield 37 by the plate fixing portions 48 to 51 of the scooter-type vehicle 1 according to the present embodiment. Therefore, it can be prevented that the license plate 45 is directly hit by travelling wind. As a result, wind resistance is reduced and the vibration of the license plate 45 or the generation of wind noise can be prevented.

Further, the windshield 37 may become bent or deformed due to being hit by the traveling wind. As a result, in order to prevent friction with the meter cover 36 and scratching due to the bending of the windshield 37, a space is preferably provided between the windshield 37 and the meter cover 36. An increase in the size of the front cover 34 can be prevented by using this space as a space for arranging the license plate 45 in the scooter-type vehicle 1 according to the present embodiment.

Furthermore, since the license plate 45 is arranged in the abovementioned space, the problem of obstruction between the license plate 45 and the steering device 7 does not occur. Consequently, an increase in the size of the front cover 34 can be prevented.

The license plate 45 can also be easily seen from the front of the vehicle through the translucent windshield 37. As a result, good visibility of the license plate can be ensured. Moreover, the license plate 45 overlaps the meter cover 36 when viewed from the front of the vehicle. As a result even if the license plate 45 is arranged between the windshield 37 and the meter cover 36, the license plate 45 is prevented from entering the field of view of the rider. That is, a reduction in the comfort of the rider is prevented.

The handle member 19 does not turn with the windshield 37 of the scooter-type vehicle 1 according to the present embodiment. If the scooter-type vehicle is a type in which the handle member turns with the windshield, the license plate 45 would also move with the windshield 37 when the license plate 45 is attached to the windshield 37.

In this case, there is a concern that the visibility of the license plate 45 by another person would be reduced due to the angle of view. Conversely, visibility of the license plate 45 can be ensured while maintaining compactness of the scooter-type vehicle 1 according to the present embodiment.

Moreover, when the license plate 45 is attached to the windshield 37 in the handle mount front cover, the weight on the handle member increases. As a result, there is a concern that the operability of the handle member is reduced. Conversely, the license plate 45 is attached to the windshield 37 in the vehicle in which the windshield 37 does not turn with the handle member 19 of the scooter-type vehicle 1 according to the present embodiment. As a result, a reduction in the operability of the handle member 19 can be avoided.

Although an embodiment of the present invention has been described so far, the present invention is not limited to the above embodiments and various modifications may be made within the scope of the invention as defined by the appended claims.

For example, the straddled vehicle may be a motorbike, a motorcycle, an All-Terrain Vehicle (ATV), a motor tricycle, or a snowmobile Moreover, the motorcycle may include sports-type motorcycles and mopeds.

The number of the front wheel 3 of the straddled vehicle is not limited to one and may be two or more. Alternatively, the number of the rear wheel 5 of the straddled vehicle is not limited to one and may be two or more.

The structure of the steering device may be changed and is not limited to the structure described in the above embodiment. For example, only one extension member may be provided and the lower edge of the steering shaft and the upper edges of the left suspension and the right suspension may be connected to the extension member.

The structure of the front cover 34 is not limited to the structure of the above embodiment and may be changed. For example, the structure of the windshield 37 may be changed from the structure of the above embodiment. The structure of the meter cover 36 may be changed form the structure of the above embodiment.

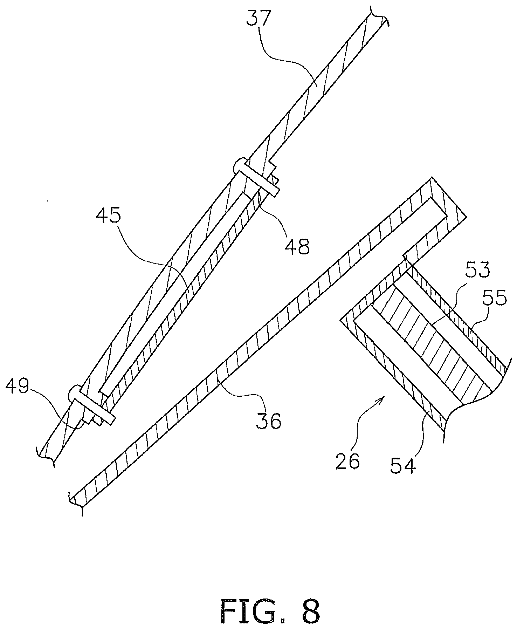

The structure of the plate fixing portion may be changed from the structure of the above embodiment. For example, Figure 8 shows a plate fixing portion according to a modified example. The plate fixing portions 48,49 may be provided on the windshield 37 as shown in Figure 8. Although not shown, the plate fixing portions 50, and 51 may also be provided on the windshield 37 in the same way as the plate fixing portions 48, 49.

Alternatively, the license plate 45 may be fixed directly to the meter cover 36 without being fixed by the stays 46, 47. That is, the plate fixing portions may be provided directly on the meter cover 36. Alternatively, the plate fixing portions may be provided with stays for fixing the license plate 45, which may be provided separately from the stays 46, 47 for fixing the windshield 37.

The windshield 37 may be attached directly to the meter cover 36 or to the front surface portion 38 without being attached by the stays 46, 47. Alternatively, the plate fixing portions may be provided in a location other than the space between the meter cover 36 and the windshield 37.

The license plate 45 may be fixed with a fixing means other than screws. The number of plate fixing portions is not limited to four as in the above embodiment, and may be less than four or greater than four. The number of shield fixing portions is not limited to four as in the above embodiment, and may be less than four or greater than four.

It will be appreciated that the term straddled vehicle used herein, and as used in the art, is meant to include the following terms also used in the art:
straddle-type vehicle, saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

## Claims

1. A straddled vehicle (1), comprising:
a head pipe (11);
a seat (4) for a rider to sit on, the seat (4) being disposed rearward of the head pipe (11);
a steering device (7) including a steering shaft (18) inserted into the head pipe (11), a front wheel (3) disposed lower than the steering shaft (18), and a handle member (19) operable by the rider to turn the front wheel (3);
a meter unit (26) disposed forward of the handle member (19);
a meter cover (36) disposed in front of the meter unit (26);
a front cover (34) disposed in front of the steering shaft (18); a license plate (45) disposed on the front cover (34); and a plate fixing portion (48,49,50,51) for fixing the license plate (45), wherein
the front cover (34) remains stationary when the steering device (7) is turned;
a middle portion in a vehicle width direction of the front cover (34) is positioned forward of a left side portion and a right side portion of the front cover (34);
a lower portion of the front cover (34) is positioned forward of an upper portion of the front cover (34); and
the front cover (34) includes:
a windshield (37) disposed in front of the meter cover (36), and
a front surface portion (38) disposed under the windshield (37);
**CHARACTERISED IN THAT**:
the windshield (37) is translucent, and
at least a portion of the license plate (45) is disposed in a space between the meter cover (36) and the windshield (37) and overlaps the meter cover (36) when viewed from the front of the vehicle (1).

2. The vehicle (1) according to claim 1, wherein
the plate fixing portion (48,49,50,51) is provided in the space between the meter cover (36) and the windshield (37).

3. The vehicle (1) according to claim 1 or 2, wherein
an upper edge of the license plate (45) is positioned lower than an upper edge of the meter cover (36) when viewed from the front of the vehicle (1).

4. The vehicle (1) according to any one of claims 1 to 3, wherein
at least a portion of the license plate (45) extends rearward and upward; and
the front cover (34) includes a hole (374) disposed under the windshield (37), and
the hole (374) communicates with the space between the meter cover (36) and the windshield (37).

5. The vehicle (1) according to any one of claims 1 to 4, wherein
the front cover (34) includes:
an upper shield fixing portion (466, 476) to which the windshield (37) is fixed, and
a lower shield fixing portion (467, 477) to which the windshield (37) is fixed, the lower shield fixing portion (467, 477) being disposed lower than the upper shield fixing portion (466,476);
the plate fixing portion (48,49,50,51) is disposed between the upper shield fixing portion (466, 476) and the lower shield fixing portion (467, 477), and
the license plate (45) is disposed between the upper shield fixing portion (466,476) and the lower shield fixing portion (467,477).

6. The vehicle (1) according to any one of claims 1 to 5, wherein
the plate fixing portion (48,49,50,51) is provided on the meter cover (36).

7. The vehicle (1) according to claim 6, further comprising
a stay (46,47) for fixing the windshield (37), the stay (46,47) being provided on the meter cover (36); wherein
the plate fixing portion (48,49,50,51) is provided on the stay (46,47).

8. The vehicle (1) according to claim 7, wherein
the stay includes a left stay (46) and a right stay (47) disposed away from each other in the vehicle width direction; and
the left stay (46) includes:
a left upper shield fixing portion (466) for fixing the windshield (37), and
a left lower shield fixing portion (467) for fixing the windshield (37), the left lower shield fixing portion (467) being disposed lower than the left upper shield fixing portion (466); and
the right stay (47) includes:
a right upper shield fixing portion (476) for fixing the windshield (37), and
a right lower shield fixing portion (477) for fixing the windshield (37), the right lower shield fixing portion (477) being disposed lower than the right upper shield fixing portion (476); and
the plate fixing portion (48,49,50,51) includes:
a left plate fixing portion (48,49) disposed between the left upper shield fixing portion (466) and the left lower shield fixing portion (467), and
a right plate fixing portion (50,51) disposed between the right upper shield fixing portion (476) and the right lower shield fixing portion (477).

9. The vehicle (1) according to claim 8, wherein
the license plate (45) is disposed between the left upper shield fixing portion (466) and the left lower shield fixing portion (467), and between the right upper shield fixing portion (476) and the right lower shield fixing portion (477).

10. The vehicle (1) according to claim 8 or 9, wherein
the license plate (45) is disposed across the right stay (47) and the left stay (46).

11. The vehicle (1) according to any one of claims 1 to 5, wherein
the plate fixing portion (48,49,50,51) is provided on the windshield (37).

12. The vehicle (1) according to any one of claims 1 to 11, wherein
a dimension of the license plate (45) in the vehicle width direction is larger than a dimension of the license plate (45) in a vehicle up-down direction.

13. The vehicle (1) according to any one of claims 1 to 12, further comprising:
an upper extending member (22) disposed above the front wheel (3), the upper extending member (22) extending in the vehicle width direction from a left side of the steering shaft (18) to a right side of the steering shaft (18); and
a lower extending member (23) disposed between the upper extending member (22) and the front wheel (3) in the vehicle up-down direction, the lower extending member (23) extending in the vehicle width direction from the left side of the steering shaft (18) to the right side of the steering shaft (18) ; wherein,
the front cover (34) extends in the vehicle width direction from a left side of a left side edge of the upper extending member (22) and a left side edge of the lower extending member (23) to a right side of a right side edge of the upper extending member (22) and a right side edge of the lower extending member (23), and
the front cover (34) extends in the vehicle up-down direction from a position higher than handle member (19) to a position lower than at least a portion of the lower extending member (23).

14. The vehicle (1) according to any one of claims 1 to 13, further comprising
a head lamp (35) provided on the front cover (34); wherein
at least a portion of the head lamp (35) is disposed lower than the meter unit (26), and
the plate fixing portion (48,49,50,51) is disposed higher than the head lamp (35).

15. The vehicle (1) according to any one of claims 1 to 14, wherein
the windshield (37) and the meter cover (36) are inclined rearward and upward with respect to a horizontal direction; and
an angle of the extension direction of the meter cover (36) with respect to the horizontal direction is smaller than an angle of the extension direction of the windshield (37) with respect to the horizontal direction.

## Patentansprüche

1. Reitsitzfahrzeug (1), das Folgendes umfasst:
ein Steuerkopfrohr (11),
einen Sitz (4), damit ein Fahrer darauf sitzt, wobei der Sitz (4) hinter dem Steuerkopfrohr (11) angeordnet ist,
eine Lenkvorrichtung (7), die eine Lenkspindel (18), die in das Steuerkopfrohr (11) eingesetzt ist, ein Vorderrad (3), das niedriger angeordnet ist als die Lenkspindel (18), und ein Griffelement (19), das durch den Fahrer bedienbar ist, um das Vorderrad (3) zu drehen, einschließt,
eine Instrumenteneinheit (26), die vor dem Griffelement (19) angeordnet ist,
eine Instrumentenverkleidung (36), die vor der Instrumenteneinheit (26) angeordnet ist,
eine Frontverkleidung (34), die vor der Lenkspindel (18) angeordnet ist,
ein Kennzeichenschild (45), das an der Frontverkleidung (34) angeordnet ist, und
einen Schildbefestigungsabschnitt (48, 49, 50, 51) zum Befestigen des Kennzeichenschildes (45),
wobei
die Frontverkleidung (34) unbeweglich bleibt, wenn die Lenkvorrichtung (7) gedreht wird,
ein in einer Fahrzeugbreitenrichtung mittlerer Abschnitt der Frontverkleidung (34) vor einem linksseitigen Abschnitt und einem rechtsseitigen Abschnitt der Frontverkleidung (34) positioniert ist,
ein unterer Abschnitt der Frontverkleidung (34) vor einem oberen Abschnitt der Frontverkleidung (34) positioniert ist und
die Frontverkleidung (34) Folgendes einschließt:
eine Windschutzscheibe (37), die vor der Instrumentenverkleidung (36) angeordnet ist, und
einen Frontflächenabschnitt (38), der unter der Windschutzscheibe (37) angeordnet ist,
**dadurch gekennzeichnet, dass**
die Windschutzscheibe (37) durchscheinend ist und
wenigstens ein Abschnitt des Kennzeichenschildes (45) in einem Raum zwischen der Instrumentenverkleidung (36) und der Windschutzscheibe (37) angeordnet ist und, wenn von der Front des Fahrzeugs (1) betrachtet, die Instrumentenverkleidung (36) überlappt.

2. Fahrzeug (1) nach Anspruch 1, wobei
der Schildbefestigungsabschnitt (48, 49, 50, 51) in dem Raum zwischen der Instrumentenverkleidung (36) und der Windschutzscheibe (37) bereitgestellt wird.

3. Fahrzeug (1) nach Anspruch 1 oder 2, wobei
eine Oberkante des Kennzeichenschildes (45), wenn von der Front des Fahrzeugs (1) betrachtet, niedriger positioniert ist als eine Oberkante der Instrumentenverkleidung (36).

4. Fahrzeug (1) nach einem der Ansprüche 1 bis 3, wobei
sich wenigstens ein Abschnitt des Kennzeichenschildes (45) nach hinten und nach oben erstreckt und
die Frontverkleidung (34) ein Loch (374) einschließt, das unter der Windschutzscheibe (37) angeordnet ist, und
das Loch (347) mit dem Raum zwischen der Instrumentenverkleidung (36) und der Windschutzscheibe (37) in Verbindung steht.

5. Fahrzeug (1) nach einem der Ansprüche 1 bis 4, wobei
die Frontverkleidung (34) Folgendes einschließt:
einen oberen Scheibenbefestigungsabschnitt (466, 476), an dem die Windschutzscheibe (37) befestigt ist, und
einen unteren Scheibenbefestigungsabschnitt (467, 477), an dem die Windschutzscheibe (37) befestigt ist, wobei der untere Scheibenbefestigungsabschnitt (467, 477) niedriger angeordnet ist als der obere Scheibenbefestigungsabschnitt (466, 476),
der Schildbefestigungsabschnitt (48, 49, 50, 51) zwischen dem oberen Scheibenbefestigungsabschnitt (466, 476) und dem unteren Scheibenbefestigungsabschnitt (467, 477) angeordnet ist und
das Kennzeichenschild (45) zwischen dem oberen Scheibenbefestigungsabschnitt (466, 476) und dem unteren Scheibenbefestigungsabschnitt (467, 477) angeordnet ist.

6. Fahrzeug (1) nach einem der Ansprüche 1 bis 5, wobei
der Schildbefestigungsabschnitt (48, 49, 50, 51) an der Instrumentenverkleidung (36) bereitgestellt wird.

7. Fahrzeug (1) nach Anspruch 6, das ferner Folgendes umfasst:
eine Strebe (46, 47) zum Befestigen der Windschutzscheibe (37), wobei die Strebe (46, 47) an der Instrumentenverkleidung (36) bereitgestellt wird, wobei
der Schildbefestigungsabschnitt (48, 49, 50, 51) an der Strebe (46, 47) bereitgestellt wird.

8. Fahrzeug (1) nach Anspruch 7, wobei
die Strebe eine linke Strebe (46) und eine rechte Strebe (47), die in der Fahrzeugbreitenrichtung entfernt voneinander angeordnet sind, und
die linke Strebe (46) Folgendes einschließt:
einen linken oberen Scheibenbefestigungsabschnitt (466) zum Befestigen der Windschutzscheibe (37) und
einen linken unteren Scheibenbefestigungsabschnitt (467) zum Befestigen der Windschutzscheibe (37), wobei der linke untere Scheibenbefestigungsabschnitt (467) niedriger angeordnet ist als der linke obere Scheibenbefestigungsabschnitt (466), und
die rechte Strebe (47) Folgendes einschließt:
einen rechen oberen Scheibenbefestigungsabschnitt (476) zum Befestigen der Windschutzscheibe (37) und
einen rechten unteren Scheibenbefestigungsabschnitt (477) zum Befestigen der Windschutzscheibe (37), wobei der rechte untere Scheibenbefestigungsabschnitt (477) niedriger angeordnet ist als der rechte obere Scheibenbefestigungsabschnitt (476), und
der Schildbefestigungsabschnitt (48, 49, 50, 51) Folgendes einschließt:
einen linken Schildbefestigungsabschnitt (48, 49), der zwischen dem linken oberen Scheibenbefestigungsabschnitt (466) und dem linken unteren Scheibenbefestigungsabschnitt (467) angeordnet ist, und
einen rechten Schildbefestigungsabschnitt (50, 51), der zwischen dem rechten oberen Scheibenbefestigungsabschnitt (476) und dem rechten unteren Scheibenbefestigungsabschnitt (477) angeordnet ist.

9. Fahrzeug (1) nach Anspruch 8, wobei
das Kennzeichenschild (45) zwischen dem linken oberen Scheibenbefestigungsabschnitt (466) und dem linken unteren Scheibenbefestigungsabschnitt (467) und zwischen dem rechten oberen Scheibenbefestigungsabschnitt (476) und dem rechten unteren Scheibenbefestigungsabschnitt (477) angeordnet ist.

10. Fahrzeug (1) nach Anspruch 8 oder 9, wobei
das Kennzeichenschild (45) über die rechte Strebe (47) und die linke Strebe (46) angeordnet ist.

11. Fahrzeug (1) nach einem der Ansprüche 1 bis 5, wobei
der Schildbefestigungsabschnitt (48, 49, 50, 51) an der Windschutzscheibe (37) bereitgestellt wird.

12. Fahrzeug (1) nach einem der Ansprüche 1 bis 11, wobei
eine Abmessung des Kennzeichenschildes (45) in der Fahrzeugbreitenrichtung größer ist als eine Abmessung des Kennzeichenschildes (45) in einer Auf-ab-Richtung des Fahrzeugs.

13. Fahrzeug (1) nach einem der Ansprüche 1 bis 12, das ferner Folgendes umfasst:
ein oberes Erweiterungselement (22), das oberhalb des Vorderrades (3) angeordnet ist, wobei sich das obere Erweiterungselement (22) in der Fahrzeugbreitenrichtung von einer linken Seite der Lenkspindel (18) zu einer rechten Seite der Lenkspindel (18) erstreckt, und
ein unteres Erweiterungselement (23), das zwischen dem oberen Erweiterungselement (22) und dem Vorderrad (3) in der Auf-ab-Richtung des Fahrzeugs angeordnet ist, wobei sich das untere Erweiterungselement (23) in der Fahrzeugbreitenrichtung von der linken Seite der Lenkspindel (18) zu der rechten Seite der Lenkspindel (18), erstreckt, wobei
sich die Frontverkleidung (34) in der Auf-ab-Richtung des Fahrzeugs von einer linken Seite einer linken Seitenkante des oberen Erweiterungselements (22) und einer linken Seitenkante des unteren Erweiterungselements (23) zu einer rechten Seite einer rechten Seitenkante des oberen Erweiterungselements (22) und einer rechten Seitenkante des unteren Erweiterungselements (23) erstreckt und
sich die Frontverkleidung (34) in der Fahrzeugbreitenrichtung von einer Position, die höher ist als das Griffelement (19), zu einer Position, die niedriger ist als wenigstens ein Abschnitt des unteren Erweiterungselements (23), erstreckt.

14. Fahrzeug (1) nach einem der Ansprüche 1 bis 13, das ferner Folgendes umfasst:
einen Frontscheinwerfer (35), der an der Frontverkleidung (34) bereitgestellt wird, wobei
wenigstens ein Abschnitt des Frontscheinwerfers (35) niedriger angeordnet ist als die Instrumenteneinheit (26) und
der Schildbefestigungsabschnitt (48, 49, 50, 51) höher angeordnet ist als der Frontscheinwerfer (35).

15. Fahrzeug (1) nach einem der Ansprüche 1 bis 14, wobei
die Windschutzscheibe (37) und die Instrumentenverkleidung (36) in Bezug auf eine Horizontalrichtung nach hinten und nach oben geneigt sind und
ein Winkel der Ausdehnungsrichtung der Instrumentenverkleidung (36) in Bezug auf die Horizontalrichtung kleiner ist als ein Winkel der Ausdehnungsrichtung der Windschutzscheibe (37) in Bezug auf die Horizontalrichtung.

## Revendications

1. Véhicule destiné à être enfourché (1), comprenant :
un tube de fourche (11) ;
un siège (4) pour qu'un conducteur s'asseye dessus, le siège (4) étant disposé à l'arrière du tube de fourche (11) ;
un dispositif de direction (7) qui inclut un arbre de direction (18) qui est inséré à l'intérieur du tube de fourche (11), une roue avant (3) qui est disposée plus bas que l'arbre de direction (18) et un élément de guidon (19) qui peut être manoeuvré par le conducteur de manière à tourner la roue avant (3) ;
une unité de compteur (26) qui est disposée à l'avant de l'élément de guidon (19) ;
un capot de compteur (36) qui est disposé devant l'unité de compteur (26) ;
un capot avant (34) qui est disposé devant l'arbre de direction (18) ;
une plaque minéralogique (45) qui est disposée sur le capot avant (34) ; et
une partie de fixation de plaque (48, 49, 50, 51) pour fixer la plaque minéralogique (45) ; dans lequel :
le capot avant (34) reste stationnaire lorsque le dispositif de direction (7) est tourné ;
une partie médiane dans une direction de largeur de véhicule du capot avant (34) est positionnée à l'avant d'une partie latérale gauche et d'une partie latérale droite du capot avant (34) ;
une partie inférieure du capot avant (34) est positionnée à l'avant d'une partie supérieure du capot avant (34) ; et
le capot avant (34) inclut :
un pare-brise (37) qui est disposé devant le capot de compteur (36) ; et
une partie de surface avant (38) qui est disposée sous le pare-brise (37) ;
**caractérisé en ce que** :
le pare-brise (37) est translucide ; et
au moins une partie de la plaque minéralogique (45) est disposée dans un espace entre le capot de compteur (36) et le pare-brise (37) et elle chevauche le capot de compteur (36), tel que vu depuis l'avant du véhicule (1).

2. Véhicule (1) selon la revendication 1, dans lequel :
la partie de fixation de plaque (48, 49, 50, 51) est prévue dans l'espace entre le capot de compteur (36) et le pare-brise (37).

3. Véhicule (1) selon la revendication 1 ou 2, dans lequel :
un bord supérieur de la plaque minéralogique (45) est positionné plus bas qu'un bord supérieur du capot de compteur (36), tel que vu depuis l'avant du véhicule (1).

4. Véhicule (1) selon l'une quelconque des revendications 1 à 3, dans lequel :
au moins une partie de la plaque minéralogique (45) s'étend vers l'arrière et vers le haut ; et
le capot avant (34) inclut un trou (374) qui est disposé sous le pare-brise (37) ; et
le trou (374) communique avec l'espace entre le capot de compteur (36) et le pare-brise (37).

5. Véhicule (1) selon l'une quelconque des revendications 1 à 4, dans lequel :
le capot avant (34) inclut :
une partie de fixation de pare-brise supérieure (466, 476) à laquelle le pare-brise (37) est fixé ; et
une partie de fixation de pare-brise inférieure (467, 477) à laquelle le pare-brise (37) est fixé, la partie de fixation de pare-brise inférieure (467, 477) étant disposée plus bas que la partie de fixation de pare-brise supérieure (466, 476) ;
la partie de fixation de plaque (48, 49, 50, 51) est disposée entre la partie de fixation de pare-brise supérieure (466, 476) et la partie de fixation de pare-brise inférieure (467, 477) ; et
la plaque minéralogique (45) est disposée entre la partie de fixation de pare-brise supérieure (466, 476) et la partie de fixation de pare-brise inférieure (467, 477).

6. Véhicule (1) selon l'une quelconque des revendications 1 à 5, dans lequel :
la partie de fixation de plaque (48, 49, 50, 51) est prévue sur le capot de compteur (36).

7. Véhicule (1) selon la revendication 6, comprenant en outre :
un moyen de suspension (46, 47) pour fixer le pare-brise (37), le moyen de suspension (46, 47) étant prévu sur le capot de compteur (36) ; dans lequel :
la partie de fixation de plaque (48, 49, 50, 51) est prévue sur le moyen de suspension (46, 47).

8. Véhicule (1) selon la revendication 7, dans lequel :
le moyen de suspension inclut un moyen de suspension gauche (46) et un moyen de suspension droit (47) qui sont disposés à distance l'un de l'autre dans la direction de largeur de véhicule ; et
le moyen de suspension gauche (46) inclut :
une partie de fixation de pare-brise supérieure gauche (466) pour fixer le pare-brise (37) ; et
une partie de fixation de pare-brise inférieure gauche (467) pour fixer le pare-brise (37), la partie de fixation de pare-brise inférieure gauche (467) étant disposée plus bas que la partie de fixation de pare-brise supérieure gauche (466) ; et
le moyen de suspension droit (47) inclut :
une partie de fixation de pare-brise supérieure droite (476) pour fixer le pare-brise (37) ; et
une partie de fixation de pare-brise inférieure droite (477) pour fixer le pare-brise (37), la partie de fixation de pare-brise inférieure droite (477) étant disposée plus bas que la partie de fixation de pare-brise supérieure droite (476) ; et
la partie de fixation de plaque (48, 49, 50, 51) inclut :
une partie de fixation de plaque gauche (48, 49) qui est disposée entre la partie de fixation de pare-brise supérieure gauche (466) et la partie de fixation de pare-brise inférieure gauche (467) ; et
une partie de fixation de plaque droite (50, 51) qui est disposée entre la partie de fixation de pare-brise supérieure droite (476) et la partie de fixation de pare-brise inférieure droite (477).

9. Véhicule (1) selon la revendication 8, dans lequel :
la plaque minéralogique (45) est disposée entre la partie de fixation de pare-brise supérieure gauche (466) et la partie de fixation de pare-brise inférieure gauche (467) ainsi qu'entre la partie de fixation de pare-brise supérieure droite (476) et la partie de fixation de pare-brise inférieure droite (477).

10. Véhicule (1) selon la revendication 8 ou 9, dans lequel :
la plaque minéralogique (45) est disposée en travers du moyen de suspension droit (47) et du moyen de suspension gauche (46).

11. Véhicule (1) selon l'une quelconque des revendications 1 à 5, dans lequel :
la partie de fixation de plaque (48, 49, 50, 51) est prévue sur le pare-brise (37).

12. Véhicule (1) selon l'une quelconque des revendications 1 à 11, dans lequel :
une dimension de la plaque minéralogique (45) dans la direction de largeur de véhicule est plus grande qu'une dimension de la plaque minéralogique (45) dans une direction haut-bas de véhicule.

13. Véhicule (1) selon l'une quelconque des revendications 1 à 12, comprenant en outre :
un élément d'extension supérieur (22) qui est disposé au-dessus de la roue avant (3), l'élément d'extension supérieur (22) s'étendant dans la direction de largeur de véhicule depuis un côté gauche de l'arbre de direction (18) jusqu'à un côté droit de l'arbre de direction (18) ; et
un élément d'extension inférieur (23) qui est disposé entre l'élément d'extension supérieur (22) et la roue avant (3) dans la direction haut-bas de véhicule, l'élément d'extension inférieur (23) s'étendant dans la direction de largeur de véhicule depuis le côté gauche de l'arbre de direction (18) jusqu'au côté droit de l'arbre de direction (18) ; dans lequel :
le capot avant (34) s'étend dans la direction de largeur de véhicule depuis un côté gauche d'un bord latéral gauche de l'élément d'extension supérieur (22) et d'un bord latéral gauche de l'élément d'extension inférieur (23) jusqu'à un côté droit d'un bord latéral droit de l'élément d'extension supérieur (22) et d'un bord latéral droit de l'élément d'extension inférieur (23) ; et
le capot avant (34) s'étend dans la direction haut-bas de véhicule depuis une position plus haute que l'élément de guidon (19) jusqu'à une position plus basse qu'au moins une partie de l'élément d'extension inférieur (23).

14. Véhicule (1) selon l'une quelconque des revendications 1 à 13, comprenant en outre :
un phare (35) qui est prévu sur le capot avant (34) ; dans lequel :
au moins une partie du phare (35) est disposée plus bas que l'unité de compteur (26) ; et
la partie de fixation de plaque (48, 49, 50, 51) est disposée plus haut que le phare (35).

15. Véhicule (1) selon l'une quelconque des revendications 1 à 14, dans lequel :
le pare-brise (37) et le capot de compteur (36) sont inclinés vers l'arrière et vers le haut par rapport à une direction horizontale ; et
un angle de la direction d'extension du capot de compteur (36) par rapport à la direction horizontale est plus petit qu'un angle de la direction d'extension du pare-brise (37) par rapport à la direction horizontale.
